# EUROPEAN PATENT APPLICATION

(11) **EP 3 613 626 A2**
(43) Date of publication of application: **26.02.2020**
(21) Application number: 19170365.1
(22) Date of filing: 19.04.2019
(51) Int. Cl.: B60L 58/21

(54) **ELECTRIC VEHICLE POWER SUPPLY SYSTEM AND POWER SUPPLY METHOD**

(30) Priority: 22.08.2018 TW 107129359
(71) Applicant: Kwang Yang Motor Co., Ltd., Kaohsiung City 807 (TW)
(72) Inventor: LI, YI LIN, 807 Kaohsiung City (TW)
(74) Representative: Lang, Christian

(57) **Abstract**

An electric vehicle power supply system and supply power method are provided. The power supply system includes: a motor; a motor controller; and a stationary power storage device and at least one removable power storage device; wherein the control unit of the stationary power storage device determines the battery information of the removable power storage device and sends a control signal to the removable power storage device, the removable power storage device sends a response signal to the stationary power storage device via the communication unit, and the stationary power storage device controls one of the stationary power storage device and the removable power storage device to supply power to the motor based on the received response signal.

## Description

### BACKGROUND

### Technical Field

The present invention relates to a power supply system, and more particularly, to an electric vehicle power supply system and power supply method.

### Related Art

Vehicles, such as cars and locomotives, are equipped with a battery to serve as an electricity supply source for the steam locomotive.

The conventional technical means for increasing the endurance of the electric vehicle is to mount a stationary battery, a removable battery and a switching unit for switching the power supply modes in the electric vehicle. The stationary battery is especially a battery that can be charged with an external power source, and the removable battery is especially a battery that needs to be exchanged at the battery exchange station.

As is known in the art for a method of using an electric vehicle power supply system, a battery unit and a charging unit are used as disclosed in Taiwan Patent No. M541670. The battery unit includes a stationary battery mounted on the electric vehicle and a removable battery mounted on the electric vehicle. The stationary battery is used to provide power for driving the electric vehicle, and the stationary battery can be directly charged by connecting an external power source to the electric vehicle. The removable battery is a removable battery that needs to be exchanged at the battery exchange station. The charging unit is electrically connected between the removable battery and the stationary battery, and the charging unit is used to charge the power of the removable battery to the stationary battery. However, the switching timing is that the power capacity of the stationary battery is exhausted before being charged through the removable battery, thereby causing a problem that the electric vehicle has poor endurance.

In summary, there is still a need to improve the switching timing between the stationary battery and the removable battery and a need to efficiently distribute the power of the power supply system, thereby improving the endurance of the electric vehicle, and further increasing the consumer's willingness to purchase the electric vehicle.

### SUMMARY

### Problems to Be Solved By the Invention

Accordingly, the present invention is directed to an electric vehicle power supply system and power supply method, which can automatically perform power distribution, thereby improving the endurance of the electric vehicle.

### Technical Means to Solve the Problems

In order to solve the above problems, the electric vehicle power supply system of the present invention comprises: a motor, driving wheels of the electric vehicle; a motor controller, configured to control the motor; a stationary power storage device, configured to supply power to the motor; and at least one removable power storage device, configured to supply power to the motor, wherein the removable power storage device is electrically connected to the stationary power storage device, and the removable power storage device can be taken away from the electric vehicle; wherein the stationary power storage device and the removable power storage device at least include a control unit and a communication unit; and the control unit of the stationary power storage device receives battery information of the removable power storage device via the communication unit, the control unit of the stationary power storage device determines the battery information of the removable power storage device and sends a control signal to the removable power storage device, the removable power storage device sends a response signal to the stationary power storage device via the communication unit, and the stationary power storage device controls one of the stationary power storage device and the removable power storage device to supply power to the motor based on the received response signal.

In order to solve the above problems, the present invention provides another electric vehicle power supply system, comprising: a motor, driving wheels of the electric vehicle; a motor controller, configured to control the motor; a stationary power storage device, configured to supply power to the motor; at least one removable power storage device, configured to supply power to the motor, wherein the removable power storage device is electrically connected to the stationary power storage device, and the removable power storage device can be taken away from the electric vehicle; and a power conversion unit, electrically connected to the stationary power storage device and the removable power storage device; the non-fully charged power storage device preferentially supplies power to the motor, and the non-fully charged stationary power storage device is charged via the power conversion unit.

In order to solve the above problems, the electric vehicle power supply method provided by the present invention comprises the following steps: a battery information transmission step: the control unit of the stationary power storage device receives battery information of the removable power storage device via the communication unit; a battery power supply determination step: the control unit of the stationary power storage device determines the battery information of the removable power storage device and sends a control signal to the removable power storage device, the removable power storage device sends a response signal to the stationary power storage device via the communication unit, and the control unit of the stationary power storage device determines the received response signal; and a battery power supply step: the stationary power storage device controls one of the stationary power storage device and the removable power storage device to supply power to the motor based on the received response signal.

### Beneficial Effects

The present invention at least has the following effects: the battery management system of the power storage devices in the power supply system is utilized to control the stationary power storage device and at least one removable power storage device to supply power to the motor controller so as to drive the power supply switching sequence of the motor, and the communication function and the effects of the power conversion unit are combined to automatically perform power distribution, thereby improving the endurance of the electric vehicle.

### BRIEF DESCRIPTION OF THE DRAWINGS

FIG. 1a is a circuit block diagram of communication power capacity comparison according to an embodiment of the present invention;
FIG. 1b is a circuit diagram of communication power capacity comparison according to an embodiment of the present invention;
FIG. 1c is a block diagram of a power storage device management system according to an embodiment of the present invention;
FIG. 2a is a schematic diagram of the power storage device charging architecture according to an embodiment of the present invention;
FIG. 2b is a schematic diagram of a power storage device charging switching scenario according to a first embodiment of the present invention;
FIG. 2c is a schematic diagram of a power storage device charging switching scenario according to a second embodiment of the present invention;
FIG. 2d is a schematic diagram of a power storage device charging switching scenario according to a third embodiment of the present invention;
FIG. 2e is a schematic diagram of a power storage device charging switching scenario according to a fourth embodiment of the present invention;
FIG. 2f is a schematic diagram of a power storage device charging switching scenario according to a fifth embodiment of the present invention;
FIG. 2g is a schematic diagram of a power storage device charging switching scenario according to a sixth embodiment of the present invention;
FIG. 2h is a schematic diagram of a power storage device charging switching scenario according to a seventh embodiment of the present invention;
FIG. 2i is a schematic diagram of a power storage device charging switching scenario according to an eighth embodiment of the present invention;
FIG. 2j is a schematic diagram of a power storage device charging switching scenario according to a ninth embodiment of the present invention;
FIG. 3 is a schematic diagram of an electric vehicle according to an embodiment of the present invention;
FIG. 4a is a schematic diagram of a foot pedal of an electric vehicle according to an embodiment of the present invention;
FIG. 4b is a schematic diagram of a removable power storage device of an electric vehicle according to an embodiment of the present invention;
FIG. 5 is a schematic diagram of the arrangement of a power storage device of an electric vehicle according to an embodiment of the present invention; and
FIG. 6 is a flow chart of an electric vehicle power supply method according to an embodiment of the present invention.

### DETAILED DESCRIPTION

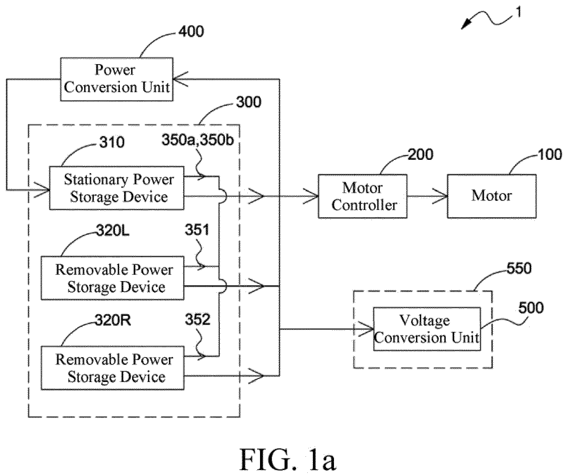

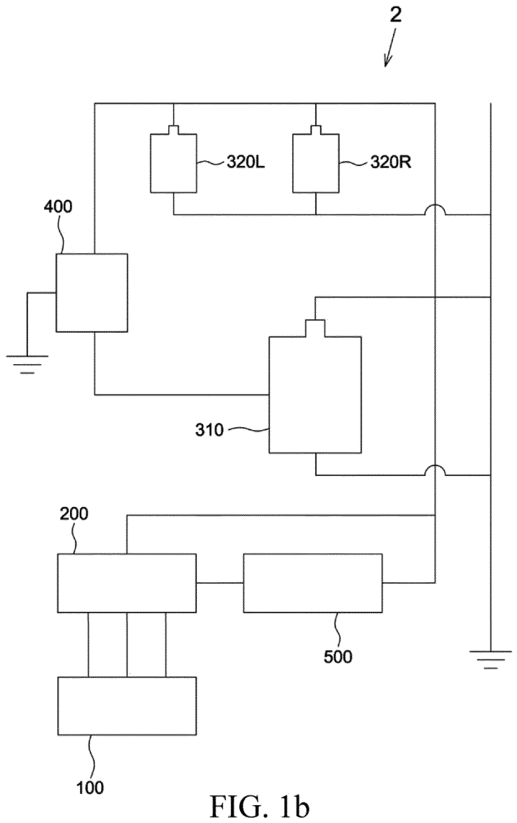

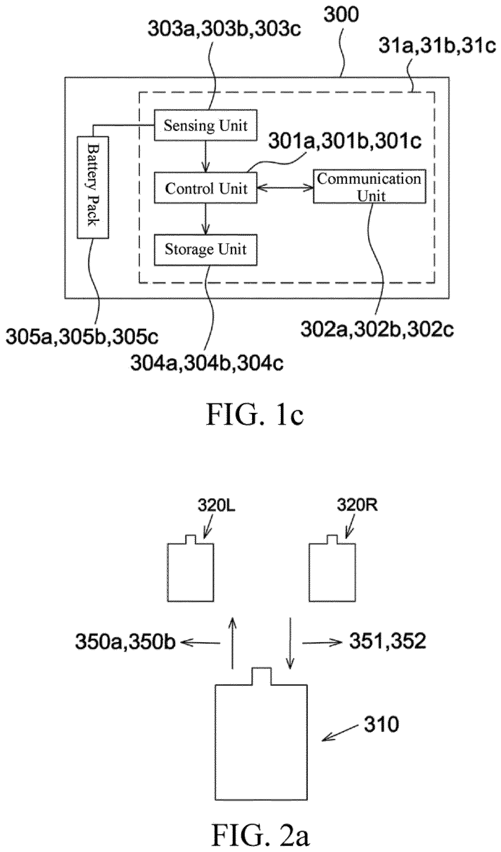

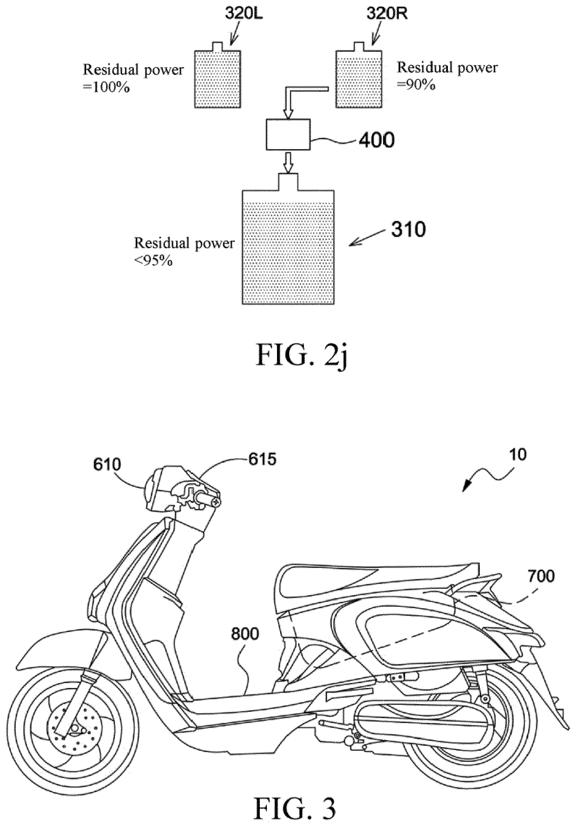

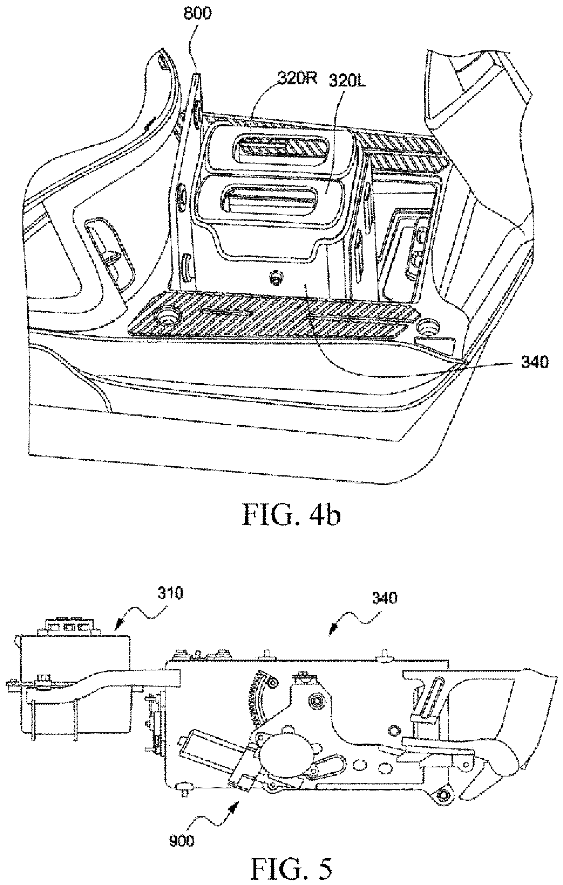

FIG. 1a is a circuit block diagram of communication power capacity comparison according to an embodiment of the present invention, FIG. 1b is a circuit diagram of communication power capacity comparison according to an embodiment of the present invention, FIG. 1c is a block diagram of a power storage device management system according to an embodiment of the present invention, FIG. 2a is a schematic diagram of the power storage device charging architecture according to an embodiment of the present invention, FIG. 3 is a schematic diagram of an electric vehicle according to an embodiment of the present invention, and FIG. 5 is a schematic diagram of the arrangement of a power storage device of an electric vehicle according to an embodiment of the present invention. Referring to FIG. 1a, FIG. 1b, FIG. 1c and FIG. 2a, an embodiment of the present invention provides an electric vehicle power supply system 1, the electric vehicle power supply system 1 including: a motor 100, driving wheels of the electric vehicle; a motor controller 200, configured to control the motor 100; a stationary power storage device 310, configured to supply power to the motor 100; and at least one removable power storage device 320L and 320R, configured to supply power required by the motor 100. The removable power storage devices 320L and 320R are electrically connected to the stationary power storage device 310, and when the removable power storage devices 320L and 320R are not electrically connected to the stationary power storage device 310, the removable power storage devices 320L and 320R can be taken away from the electric vehicle and can be charged externally. The stationary power storage device 310 at least includes a control unit 301a and a communication unit 302a, the removable power storage 320L at least includes a control unit 301b and a communication unit 302b, and the removable power storage 320R at least includes a control unit 301c and a communication unit 302c; the control unit 301a of the stationary power storage device 310 sends control signals (350a and 350b) respectively to the removable power storage device 320L and the removable power storage device 320R via the communication unit 302a, and after the control unit 301b of the removable power storage device 320L and the control unit 301c of the removable power storage device 320R send response signals (351 and 352) to the stationary power storage device 310 respectively via the communication units (302b and 302c), the control unit 301a of the stationary power storage device 310 makes a determination, and controls one of the stationary power storage device 310 and the removable power storage devices 320L and 320R supply power supply to the motor 100; for example, after the control unit 301a of the stationary power storage device 310 sends an on control signal 350a to the removable power storage device 320L, and sends an off control signal 350b to the removable power storage device 320R via the communication unit 302a, then the control unit 301b of the removable power storage device 320L sends an on response signal 351 to the stationary power storage device 310 via the communication unit 302b and the control unit 301c of the removable power storage device 320R sends an off response signal 352 to the stationary power storage device 310 via the communication unit 302c, and the control unit 301a of the stationary power storage device 310 determines to supply power by the removable power storage device 320L to the motor 100. The electric vehicle at least includes an electric motor vehicle, an electric bicycle, an electric car, an electric scooter, an electric ATV, an electric utility vehicle, and the like, which are driven by motor power.

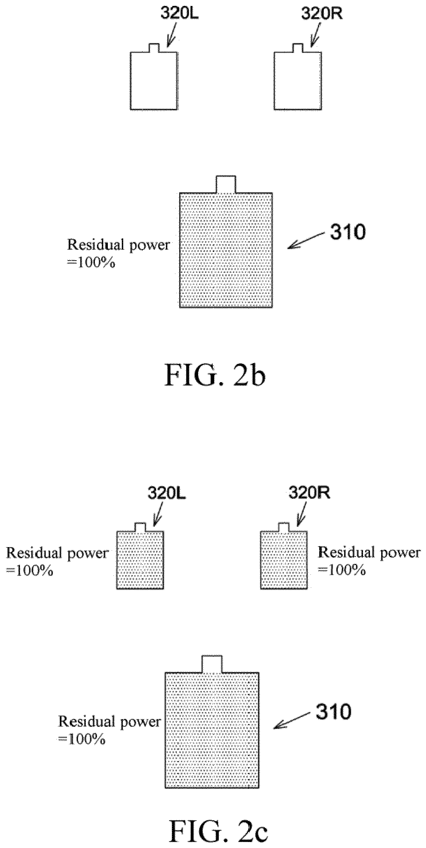

FIG. 2b is a schematic diagram of a power storage device charging switching scenario according to a first embodiment of the present invention, and FIG. 2c is a schematic diagram of a power storage device charging switching scenario according to a second embodiment of the present invention. Referring to FIG. 1b, FIG. 1c and FIG. 2b, an embodiment of the present invention provides an electric vehicle power supply system circuit 2, the electric vehicle power supply system circuit 2 including: when the control unit 301 of the stationary power storage device 310 determines that the removable power storage devices 320L and 320R do not have power (for example, the power is equal to 0%), the stationary power storage device 310 (for example, the power is equal to 100%) is controlled to supply power to the motor 100.

Referring to FIG. 1b, FIG. 1c and FIG. 2c, an embodiment of the present invention provides an electric vehicle power supply system circuit 2, the electric vehicle power supply system circuit 2 including: when the control unit 301 of the stationary power storage device 310 determines that the removable power storage devices 320L and 320R are all fully charged (for example, the power is equal to 100%), the stationary power storage device 310 controls the removable power storage device 320L to preferentially supply power to the motor 100, when the removable power storage device 320L has no sufficient power (for example, the power is less than 15%) for power supply, the control unit 301 of the stationary power storage device 310 makes a determination and then controls the removable power storage device 320R to supply power to the motor 100, and when the removable power storage device 320R has no sufficient power (for example, the power is less than 15%) for power supply, the control unit 301 of the stationary power storage device 310 makes a determination and then controls the stationary power storage device 310 to supply power to the motor 100.

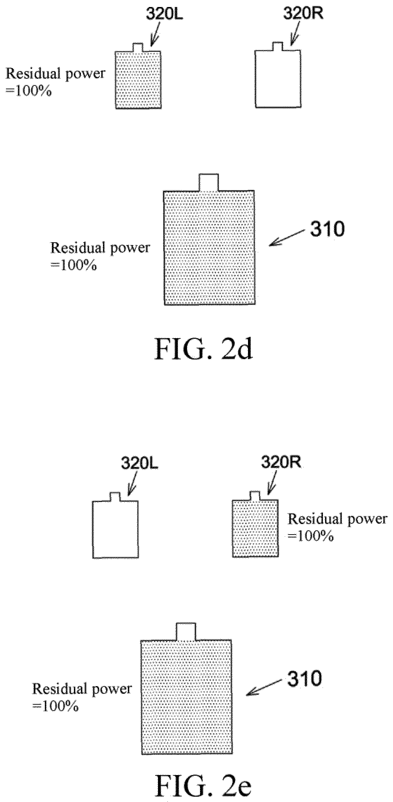

FIG. 2d is a schematic diagram of a power storage device charging switching scenario according to a third embodiment of the present invention, and FIG. 2e is a schematic diagram of a power storage device charging switching scenario according to a fourth embodiment of the present invention. Referring to FIG. 1b, FIG. 1c and FIG. 2d, an embodiment of the present invention provides an electric vehicle power supply system circuit 2, the electric vehicle power supply system circuit 2 including: when the control unit 301 of the stationary power storage device 310 determines that the removable power storage device 320L has power (for example, the power is equal to 100%), the stationary power storage device 310 controls the removable power storage device 320L to preferentially supply power to the motor 100, and when the removable power storage device 320L has no sufficient power (for example, the power is less than 15%) for power supply, the control unit 301 of the stationary power storage device 310 makes a determination and then controls the stationary power storage device 310 to supply power to the motor 100. A power conversion unit 400 is further included, the power conversion unit 400 being electrically connected to the stationary power storage device 310 and the removable power storage device 320L. When the removable power storage device 320L supplies power to the motor 100, the non-fully charged stationary power storage device 310 is charged via the power conversion unit 400.

Referring to FIG. 1b, FIG. 1c and FIG. 2e, an embodiment of the present invention provides an electric vehicle power supply system circuit 2, the electric vehicle power supply system circuit 2 including: when the control unit 301 of the stationary power storage device 310 determines that the removable power storage device 320R has power (for example, the power is equal to 100%), the stationary power storage device 310 controls the removable power storage device 320R to preferentially supply power to the motor 100, and when the removable power storage device 320R has no sufficient power (for example, the power is less than 15%) for power supply, the control unit 301 of the stationary power storage device 310 makes a determination and then controls the stationary power storage device 310 to supply power to the motor 100. A power conversion unit 400 is further included, the power conversion unit 400 being electrically connected to the stationary power storage device 310 and the removable power storage device 320R. When the removable power storage device 320R supplies power to the motor 100, the non-fully charged stationary power storage device 310 is charged via the power conversion unit 400.

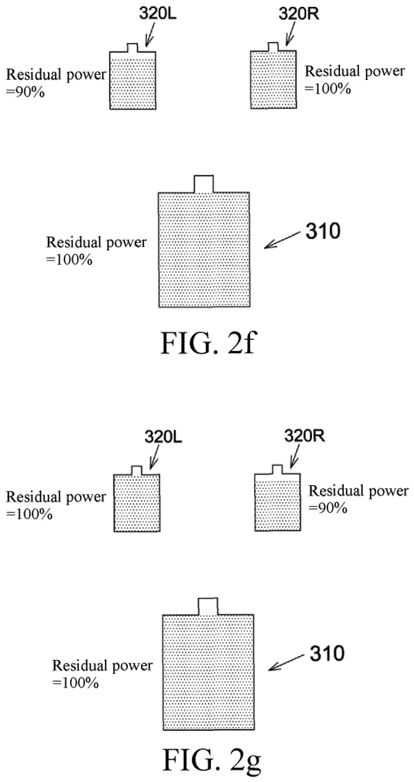

FIG. 2f is a schematic diagram of a power storage device charging switching scenario according to a fifth embodiment of the present invention, and FIG. 2g is a schematic diagram of a power storage device charging switching scenario according to a sixth embodiment of the present invention. Referring to FIG. 1b, FIG. 1c and FIG. 2f, an embodiment of the present invention provides an electric vehicle power supply system circuit 2, the electric vehicle power supply system circuit 2 including: when the electric vehicle has the non-fully charged removable power storage device 320L (for example, the power is equal to 90%) and the removable power storage device 320R (for example, the power is equal to 100%), the control unit 301 of the stationary power storage device 310 makes a determination and then controls the non-fully charged removable power storage device 320L to preferentially supply power, when the non-fully charged removable power storage device 320L has no sufficient power (for example, the power is less than 15%) for power supply, the control unit 301 of the stationary power storage device 310 makes a determination and then controls the fully charged removable power storage device 320R to supply power to the motor 100, and when the fully charged removable power storage device 320R has no sufficient power (for example, the power is less than 15%) for power supply, the control unit 301 of the stationary power storage device 310 makes a determination and then controls the stationary power storage device 310 to supply power to the motor 100.

Referring to FIG. 1b, FIG. 1c and FIG. 2g, an embodiment of the present invention provides an electric vehicle power supply system circuit 2, the electric vehicle power supply system circuit 2 including: when the electric vehicle has the non-fully charged removable power storage device 320R (for example, the power is equal to 90%) and the fully charged removable power storage device 320L (for example, the power is equal to 100%), the control unit 301 of the stationary power storage device 310 makes a determination and then controls the non-fully charged removable power storage device 320R to preferentially supply power, when the non-fully charged removable power storage device 320R has no sufficient power (for example, the power is less than 15%) for power supply, the control unit 301 of the stationary power storage device 310 makes a determination and then controls the fully charged removable power storage device 320L to supply power to the motor 100, and when the fully charged removable power storage device 320L has no sufficient power (for example, the power is less than 15%) for power supply, the control unit 301 of the stationary power storage device 310 makes a determination and then controls the stationary power storage device 310 to supply power to the motor 100.

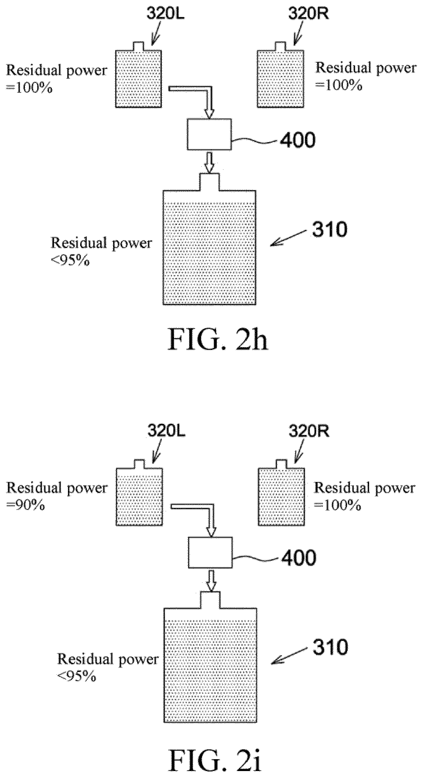

FIG. 2h is a schematic diagram of a power storage device charging switching scenario according to a seventh embodiment of the present invention. Referring to FIG. 1b,

FIG. 1c and FIG. 2h, an embodiment of the present invention provides an electric vehicle power supply system circuit 2, the electric vehicle power supply system circuit 2 including: when the control unit 301 of the stationary power storage device 310 determines that the removable power storage devices 320L and 320R have power (for example, the power is equal to 100%), the stationary power storage device 310 controls the removable power storage device 320L to preferentially supply power to the motor 100, when the removable power storage device 320L has no sufficient power (for example, the power is less than 15%) for power supply, the control unit 301 of the stationary power storage device 310 makes a determination and then controls the fully charged removable power storage device 320R to supply power to the motor 100, and when the fully charged removable power storage device 320R has no sufficient power (for example, the power is less than 15%) for power supply, the control unit 301 of the stationary power storage device 310 makes a determination and then controls the stationary power storage device 310 to supply power to the motor 100. A power conversion unit 400 is further included, the power conversion unit 400 being electrically connected to the stationary power storage device 310 and the removable power storage devices 320L and 320R. When the removable power storage device 320L supplies power to the motor 100, the non-fully charged stationary power storage device 310 (for example, the power is less than 95%) is charged via the power conversion unit 400.

FIG. 2i is a schematic diagram of a power storage device charging switching scenario according to an eighth embodiment of the present invention. Referring to FIG. 1b, FIG. 1c and FIG. 2i, an embodiment of the present invention provides an electric vehicle power supply system circuit 2, the electric vehicle power supply system circuit 2 including: when the electric vehicle has the non-fully charged removable power storage device 320L (for example, the power is equal to 90%) and the fully charged removable power storage device 320R (for example, the power is equal to 100%), the control unit 301 of the stationary power storage device 310 makes a determination and then controls the non-fully charged removable power storage device 320L to preferentially supply power, when the non-fully charged removable power storage device 320L has no sufficient power (for example, the power is less than 15%) for power supply, the control unit 301 of the stationary power storage device 310 makes a determination and then controls the fully charged removable power storage device 320R to supply power to the motor 100, and when the fully charged removable power storage device 320R has no sufficient power (for example, the power is less than 15%) for power supply, the control unit 301 of the stationary power storage device 310 makes a determination and then controls the stationary power storage device 310 to supply power to the motor 100. A power conversion unit 400 is further included, the power conversion unit 400 being electrically connected to the stationary power storage device 310 and the removable power storage devices 320L and 320R. When the removable power storage device 320L supplies power to the motor 100, the non-fully charged stationary power storage device 310 (for example, the power is less than 95%) is charged via the power conversion unit 400.

FIG. 2j is a schematic diagram of a power storage device charging switching scenario according to a ninth embodiment of the present invention. Referring to FIG. 1b, FIG. 1c and FIG. 2j, an embodiment of the present invention provides an electric vehicle power supply system circuit 2, the electric vehicle power supply system circuit 2 including: when the electric vehicle has the non-fully charged removable power storage device 320R (for example, the power is equal to 90%) and the fully charged removable power storage device 320L (for example, the power is equal to 100%), the control unit 301 of the stationary power storage device 310 makes a determination and then controls the non-fully charged removable power storage device 320R to preferentially supply power, when the non-fully charged removable power storage device 320R has no sufficient power (for example, the power is less than 15%) for power supply, the control unit 301 of the stationary power storage device 310 makes a determination and then controls the fully charged removable power storage device 320L to supply power to the motor 100, and when the fully charged removable power storage device 320L has no sufficient power (for example, the power is less than 15%) for power supply, the control unit 301 of the stationary power storage device 310 makes a determination and then controls the stationary power storage device 310 to supply power to the motor 100. A power conversion unit 400 is further included, the power conversion unit 400 being electrically connected to the stationary power storage device 310 and the removable power storage devices 320L and 320R. When the removable power storage device 320R supplies power to the motor 100, the non-fully charged stationary power storage device 310 (for example, the power is less than 95%) is charged via the power conversion unit 400.

Referring to FIG. 1c (in the symbols, the one with the code a corresponds to the device in the stationary power storage device 310, the one with the code b corresponds to the device in the removable power storage device 320L, and the one with the code c corresponds to the device in the removable power storage device 320R), an embodiment of the present invention provides a power storage device 300, the power storage device 300 including a battery management system (31a, 31b, 31c) and a battery pack (305a, 305b, 605c). The battery management system (31a, 31b, 31c) includes at least one sensing unit (303a, 303b, 303c) and a storage unit (304a, 304b, 304c). The sensing unit (303a, 303b, 303c) is electrically connected to the control unit (301a, 301b, 301c) correspondingly and configured to sense battery information such as a temperature change, a current change, and a voltage change of the power storage device 300 (for example, the stationary power storage device and the removable power storage devices). The control unit (301a, 301b, 301c) is electrically connected to the storage unit (304a, 304b, 304c) and the communication unit (302a, 302b, 302c) correspondingly.

Referring to FIG. 1b and FIG. 1c, in an embodiment of the present invention, the switching to another removable power storage device occurs when the fully-charged removable power storage devices 320L and 320R do not have sufficient power (for example, the power is less than 15%) for power supply, and besides, other conditions for switching to another removable power storage device include: the temperature of the removable power storage device supplying power is greater than 68 degrees or the voltage of the cell of the removable power storage device is too low (for example, 2.8 volts), and the motor load is high and the voltage of the removable power storage device is too low (for example, 35-43 volts).

Referring to FIG. 1a, FIG. 1b and FIG. 1c, the power storage device 300 is a battery; the motor is a hub motor that directly drives wheels of the electric vehicle, and in another embodiment, the motor may also indirectly drive wheels of the electric vehicle via one or a combination of gears, belts, chains and other transmission mechanisms; the power conversion unit 400 is a charger; and a communication mode of the communication unit (302a, 302b, 302c) is a controller area network mode (for example, CAN) or a differential transmission mode (for example, RS485).

Referring to FIG. 1a, FIG. 1b and FIG. 1c, a plurality of power storage devices 300 include a stationary power storage device 310 and two removable power storage devices 320L and 320R, but may also implemented as a stationary power storage device 310 and a removable power storage device 320L or 320R (no drawing).

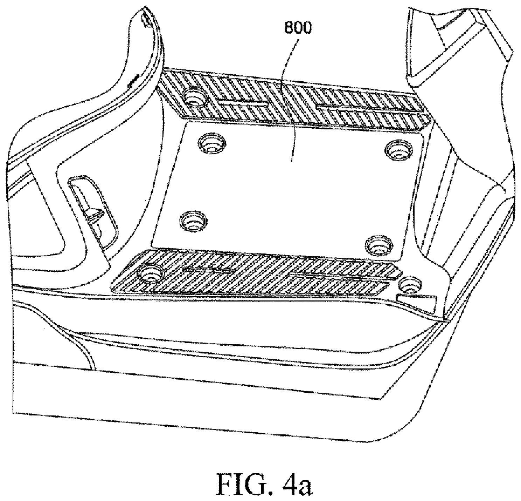

FIG. 4a is a schematic diagram of a foot pedal of an electric vehicle according to an embodiment of the present invention, and FIG. 4b is a schematic diagram of a removable power storage device of an electric vehicle according to an embodiment of the present invention. In an implementation of the plurality of power storage devices 300, the following patterns may be used: referring to FIG. 3 and FIG. 4b, two power storage devices are provided, one stationary power storage device 310 is disposed below a storage box 700, and one removable power storage device 320L or 320R is disposed below the foot pedal 800 (a power box 340 as shown in FIG. 4b is rotated to an open position), or the removable power storage device 320L or 320R is disposed in the storage box 700 (directly removed and replaced by opening the seat cushion).

Referring to FIG. 3 and FIG. 4b, three power storage devices are provided, one stationary power storage device 310 is disposed below a storage box 700, and two removable power storage devices 320L and 320R are disposed below the foot pedal 800 (a power box 340 as shown in FIG. 4b is rotated to an open position), or the removable power storage devices 320L or 320R are disposed in the storage box 700 (directly removed and replaced by opening the seat cushion).

Referring to FIG. 3 and FIG. 4b, three power storage devices are provided, one removable power storage device (not shown) is disposed below a storage box 700, and two removable power storage devices 320L and 320R are disposed below the foot pedal 800 (a power box 340 as shown in FIG. 4b is rotated to an open position).

Referring to FIG. 3, three power storage devices are provided, and three removable power storage devices (not shown) are disposed in a storage box 700 (directly removed and replaced by opening the seat cushion).

The following is a further description based on FIG. 1a and FIG. 1c: the plurality of power storage devices 300 include: a stationary power storage device 310, configured to supply power to the motor 100; at least two removable power storage devices 320L and 320R, which are electrically connected to the stationary power storage device 310, configured to supply power required by the motor 100 and can be taken away from the electric vehicle; and a power conversion unit 400, electrically connected to the stationary power storage device 310 and the removable power storage devices 320L and 320R. One of the removable power storage devices 320L and 320R supplies power to the motor 100, and the stationary power storage device 310 is charged via the power conversion unit 400. When the power capacity of one of the removable power storage devices 320L or 320R is reduced to a preset power capacity set value (for example, to 15% of the battery residual power capacity), after the power capacity of the removable power storage devices 320L or 320R is compared with that of the stationary power storage device 310 via the communication unit 302a, it is automatically switched to one of the removable power storage devices 320L or 320R or the stationary power storage device 310 to continuously supply power required by the motor 100, thereby improving the endurance of the electric vehicle.

Referring to FIG. 1a and FIG. 3, the electric vehicle power supply system 1 further includes a voltage conversion unit 500, the voltage conversion unit 500 may be disposed in the power box controller 550 or may be disposed outside the power box controller 550, the voltage conversion unit 500 disposed outside the power box controller 550 reduces a voltage (for example, 48 volts) of one of the power storage devices 300 to the power (for example, 12 volts) required by vehicle-mounted devices of the electric vehicle 10, and the vehicle-mounted devices at least include a vehicle lamp 610 and an instrument 615.

Referring to FIG. 1a and FIG. 5, the electric vehicle power supply system 1 further includes a power box controller 550 and a power box motor drive mechanism 900, the power box controller 550 includes a voltage conversion unit 500, and the voltage conversion unit 500 disposed in the power box controller 550 reduces a voltage (for example, 48 volts) of one of the power storage devices 300 to the power required by the power box motor drive mechanism 900 via the voltage conversion unit 500; and the power box motor drive mechanism 900 is capable of rotating a power box 340 to an open position or a storage position, when rotated to the open position (as shown in FIG. 4b), it is convenient to take out the removable power storage devices 320L and 320R, and the power box 340 stores the removable power storage devices 320L and 320R.

Referring to FIG. 1a and FIG. 5, the power storage devices 300 include at least one stationary power storage device 310 and at least one removable power storage device 320L or 320R.

Referring to FIG. 3, FIG. 4a and FIG. 4b, an electric vehicle 10 includes a storage box 700, a foot pedal 800 and a removable power storage device 320L or 320R. The foot pedal 800 and the power box 340 are assembled together.

Referring to FIG. 1a, only one of the plurality of power storage devices 300 supplies power each time supplied to the motor controller; and when the power capacity of the current power supply is lower than the threshold and the power is nearly exhausted, it will automatically switch to one of the plurality of power storage devices 300 that is currently the most powerful to supply power, until all the plurality of power storage devices 300 are exhausted; this is the best endurance mode, and its power supply switching timing can be automatically switched while waiting for the traffic light or at low speed.

Another effect is that when a power storage device continuously outputs too much power, causing the temperature to rise to the protection threshold and a must for power-off, the other power storage device can continuously supply power without instantaneous power-off, and the original power storage device at higher temperature can rest and cool down until it is restored before power supply, thereby solving the problem that the ridding is disabled due to the power-off caused by over-temperature of the power storage device.

Generally, the smaller the number of parallel cells of the power storage device, the easier the over-temperature when the supply current is large, so many electric vehicles have a large number of parallel battery cells to achieve the high discharge capacity and avoid over-temperature, but they have the defects of heavy weight and inconvenience in removal. In the system architecture of the present invention, when the power storage device is over-temperature, it can be switched to another power storage device for power supply, and the system cannot be powered off, and the plurality of power storage devices 300 with a small number of parallel cells can be used to achieve the advantages of light weight and convenience in removal of the removable power storage devices 320L and 320R.

Referring to FIG. 1a, FIG. 1b, FIG. 1c and FIG. 2a to FIG. 2j, an electric vehicle power supply method includes the following steps: providing an electric vehicle power supply system 1; and entering a power supply mode to use the stationary power storage device 310 and the removable power storages 320L and 320R to supply required power to the motor 100, thus maintaining the endurance of the vehicle. The power supply method can be divided into seven patterns. First pattern: when the control unit 301a of the stationary power storage device 310 determines that there is only the stationary power storage 310, the stationary power storage device 310 supplies power to the motor 100 (as shown in FIG. 2b). Second pattern: when the control unit 301a of the stationary power storage device 310 determines that there are a plurality of removable power storage devices 320L and 320R and when the plurality of removable power storage devices 320L and 320R and the stationary power storage device 310 are all fully charged, the removable power storage device 320L firstly supplies power to the motor 100 (as shown in FIG. 2c). Third pattern: when the control unit 301a of the stationary power storage device 310 determines that there is only one removable power storage device 320L or 320R and when the removable power storage devices 320L or 320R and the stationary power storage device 310 are both fully charged, the removable power storage device 320L or 320R firstly supplies power to the motor 100 (as shown in FIG. 2d and FIG. 2e). Fourth pattern: when the control unit 301a of the stationary power storage device 310 determines that there are a plurality of removable power storage devices 320L and 320R and when one removable power storage device 320L or 320R is not fully charged and the other removable power storage device 320L or 320R and the stationary power storage device 310 are both fully charged, the non-fully charged removable power storage device 320L or 320R firstly supplies power to the motor 100 (as shown in FIG. 2f and FIG. 2g). Fifth pattern: when the control unit 301a of the stationary power storage device 310 determines that there are a plurality of fully charged removable power storage devices 320L and 320R that are fully charged and when the stationary power storage device 310 is not fully charged, the fully charged removable power storage device 320L firstly charges the non-fully charged stationary power storage device 310 via the power conversion unit 400, and at the same time, supplies power to the motor 100 (as shown in FIG. 2h). Sixth pattern: when the control unit 301a of stationary power storage device 310 determines that there are one non-fully charged removable power storage device 320L or 320R and one fully charged removable power storage device 320L or 320R and when the stationary power storage device 310 is not fully charged, the non-fully charged removable power storage device 320L or 320R firstly charges the non-fully charged stationary power storage device 310 via the power conversion unit 400, and at the same time, supplies power to the motor 100 (as shown in FIG. 2i and FIG. 2j). Seventh pattern: when the control unit 301a of the stationary power storage device 310 determines that there is only one non-fully charged removable power storage device 320L or 320R or only one fully charged removable power storage device 320L or 320R and when the stationary power storage device 310 is not fully charged, the non-fully charged or fully charged removable power storage device 320L or 320R firstly charges the non-fully charged stationary power storage device 310 via the power conversion unit 400, and at the same time, supplies power to the motor 100.

It can be seen from the above that the battery management system of the power storage devices in the power supply system is utilized to control the stationary power storage device and the plurality of removable power storage devices to supply power to the motor controller so as to drive the power supply switching sequence of the motor, and the communication function and the effects of the power conversion unit are combined to automatically perform power distribution, thereby improving the endurance of the electric vehicle.

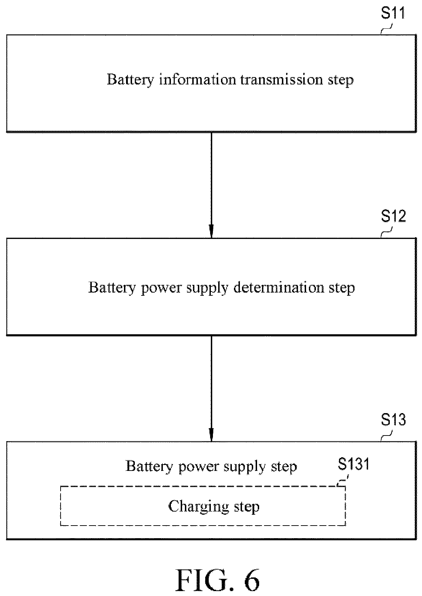

Referring to FIG. 6 again, FIG. 6 is a flow chart of an electric vehicle power supply method according to an embodiment of the present invention. In the electric vehicle supply power method of the present embodiment, the electric vehicle has a power supply system 1 as disclosed in the above embodiment, for example, the power supply system includes a motor 100, a motor controller 200, a stationary power storage device 310 and at least one removable power storage device (320L/320R). The stationary power storage device and the removable power storage device at least include a control unit and a communication unit, the supply power method including the following steps:
a battery information transmission step (step S11): the control unit of the stationary power storage device receives battery information of the removable power storage device via the communication unit;
a battery power supply determination step (step S12): the control unit of the stationary power storage device determines the battery information of the removable power storage device and sends a control signal to the removable power storage device, the removable power storage device sends a response signal to the stationary power storage device via the communication unit, and the control unit of the stationary power storage device determines the received response signal; and
a battery power supply step (step S13): the stationary power storage device controls one of the stationary power storage device and the removable power storage device to supply power to the motor based on the received response signal.

In a method embodiment, the stationary power storage device and the removable power storage device further include at least one sensing unit and a storage unit, the sensing unit is electrically connected to the control unit and configured to sense battery information such as a temperature change, a current change, and a voltage change of the stationary power storage device and the removable power storage device, and the control unit is electrically connected to the storage unit and the communication unit.

In a method embodiment, the battery power supply determination step further includes: determining whether the removable power storage device has power, and when the removable power storage has power, preferentially supplying power by the removable power storage device.

It is worth mentioning that, in an embodiment of the foregoing battery power supply step (step S13), the power supply system further includes a power conversion unit, and the battery power supply step further includes a charging step (step S131): when the removable power storage device supplies power to the motor, charging the non-fully charged stationary power storage device via the power conversion unit. In addition, in a method embodiment, the battery power determination step (step S12) may further include: determining whether the removable power storage device has power, and when the removable power storage device has power, preferentially supplying power by the removable power storage device.

It is worth mentioning that, in a method embodiment, the electric vehicle has the non-fully charged removable power storage device and the fully charged removable power storage device, and the non-fully charged power storage device preferentially supplies power to the motor.

In conclusion, the above descriptions are only the implementations or embodiments of technical means adopted by the present invention to solve the problems, but not intended to limit the implementation scope of the present invention. That is, the equivalent changes and modifications consistent with the claims of the present invention or made in accordance with the claims of the present invention are all covered by the claims of the present invention.

### Brief Description of Reference Numerals

- 1: Electric Vehicle Power Supply System
- 2: Electric Vehicle Power Supply System Circuit
- 10: Electric Vehicle
- 100: Motor
- 200: Motor Controller
- 300: Power Storage Device
- 310: Stationary Power Storage Device
- 31: Battery Management System
- 301a, 301b, 301c: Control Unit
- 302a, 302b, 302c: Communication Unit
- 303a, 303b, 303c: Sensing Unit
- 304a, 304b, 304c: Storage Unit
- 305a, 305b, 305c: Battery Pack
- 320L: Removable Power Storage Device
- 320R: Removable Power Storage Device
- 340: Power Box
- 350a, 350b: Control Signal
- 351, 352: Response Signal
- 400: Power Conversion Unit
- 500: Voltage Conversion Unit
- 550: Power Box Controller
- 610: Vehicle Lamp
- 615: Instrument
- 700: Storage Box
- 800: Foot Pedal
- 900: Power Box Motor Drive Mechanism
- Steps S11-S131: Steps of electric vehicle supply power method

## Claims

1. An electric vehicle power supply system, comprising:
a motor, driving wheels of the electric vehicle;
a motor controller, configured to control the motor;
a stationary power storage device, configured to supply power to the motor; and
at least one removable power storage device, configured to supply power to the motor, wherein the removable power storage device is electrically connected to the stationary power storage device, and the removable power storage device can be taken away from the electric vehicle;
wherein the stationary power storage device and the removable power storage device at least comprise a control unit and a communication unit; and the control unit of the stationary power storage device receives battery information of the removable power storage device via the communication unit, the control unit of the stationary power storage device determines the battery information of the removable power storage device and sends a control signal to the removable power storage device, the removable power storage device sends a response signal to the stationary power storage device via the communication unit, and the stationary power storage device controls one of the stationary power storage device and the removable power storage device to supply power to the motor based on the received response signal.

2. The electric vehicle power supply system according to claim 1, wherein when the control unit of the stationary power storage device determines that the removable power storage device has power, the stationary power storage device controls the removable power storage device to preferentially supply power to the motor, and when the removable power storage device has no sufficient power to supply power, the control unit of the stationary power storage device makes a determination and then controls the stationary power storage device to supply power to the motor.

3. The electric vehicle power supply system according to claim 1, wherein the electric vehicle has the non-fully charged removable power storage device and the fully charged removable power storage device, the control unit of the stationary power storage device makes a determination and then controls the non-fully charged removable power storage device to preferentially supply power, when the non-fully charged removable power storage device has no sufficient power to supply power, the control unit of the stationary power storage device makes a determination and then controls the fully charged removable power storage device to supply power to the motor, and when the fully charged removable power storage device has no sufficient power to supply power, the control unit of the stationary power storage device makes a determination and then controls the stationary power storage device to supply power to the motor.

4. The electric vehicle power supply system according to claim 2 or 3, further comprising a power conversion unit, wherein the power conversion unit is electrically connected to the stationary power storage device and the removable power storage device; when the removable power storage device supplies power to the motor, the non-fully charged stationary power storage device is charged via the power conversion unit; and the power conversion unit is a charger.

5. The electric vehicle power supply system according to claim 1, wherein the stationary power storage device and the removable power storage device further comprise at least one sensing unit and a storage unit; the sensing unit is electrically connected to the control unit and configured to sense a temperature change, a current change and a voltage change of the stationary power storage device and the removable power storage device; and the control unit is electrically connected to the storage unit and the communication unit.

6. The electric vehicle power supply system according to claim 1, wherein the removable power storage device and the stationary power storage device are batteries; and a communication mode of the communication unit is a controller area network mode or a differential transmission mode.

7. The electric vehicle power supply system according to claim 1, further comprising a voltage conversion unit, wherein the voltage conversion unit reduces the voltage of one of the power storage devices to the power required by vehicle-mounted devices of the electric vehicle, and the vehicle-mounted devices at least comprise a vehicle lamp and an instrument.

8. The electric vehicle power supply system according to claim 1, further comprising a power box controller and a power box motor drive mechanism, wherein the power box controller comprises a voltage conversion unit for reducing the voltage of one of the stationary power storage device and the removable power storage device to the power required by the power box motor drive mechanism via the voltage conversion unit.

9. The electric vehicle power supply system according to claim 1, further comprising a power box controller and a power box motor drive mechanism, wherein the power box motor drive mechanism is capable of rotating a power box to an open position or a storage position, and the power box stores the removable power storage device.

10. An electric vehicle power supply system, comprising:
a motor, driving wheels of the electric vehicle;
a motor controller, configured to control the motor;
a stationary power storage device, configured to supply power to the motor;
at least a removable power storage device, configured to supply power to the motor, wherein the removable power storage device is electrically connected to the stationary power storage device, and the removable power storage device can be taken away from the electric vehicle; and
a power conversion unit, electrically connected to the stationary power storage device and the removable power storage device;
wherein the non-fully charged power storage device preferentially supplies power to the motor, and the non-fully charged stationary power storage device is charged via the power conversion unit.

11. The electric vehicle power supply system according to claim 10, wherein the removable power storage device and the stationary power storage device are batteries; and the power conversion unit is a charger.

12. The electric vehicle power supply system according to claim 10, further comprising a voltage conversion unit, wherein the voltage conversion unit reduces the voltage of one of the power storage devices to the power required by vehicle-mounted devices of the electric vehicle, and the vehicle-mounted devices at least comprise a vehicle lamp and an instrument.

13. The electric vehicle power supply system according to claim 10, further comprising a power box controller and a power box motor drive mechanism, wherein the power box controller comprises a voltage conversion unit for reducing the voltage of one of the power storage devices to the power required by the power box motor drive mechanism via the voltage conversion unit; and the power box motor drive mechanism is capable of rotating a power box to an open position or a storage position, and the power box stores the removable power storage device.

14. An electric vehicle supply power method, the electric vehicle having a power supply system, the power supply system comprising a motor, a motor controller, a stationary power storage device and at least one removable power storage device, and the stationary power storage device and the removable power storage device at least comprising a control unit and a communication unit, wherein the supply power method comprises the following steps:
a battery information transmission step: the control unit of the stationary power storage device receives battery information of the removable power storage device via the communication unit;
a battery power supply determination step: the control unit of the stationary power storage device determines the battery information of the removable power storage device and sends a control signal to the removable power storage device, the removable power storage device sends a response signal to the stationary power storage device via the communication unit, and the control unit of the stationary power storage device determines the received response signal; and
a battery power supply step: the stationary power storage device controls one of the stationary power storage device and the removable power storage device to supply power to the motor based on the received response signal.

15. The electric vehicle power supply method according to claim 14, wherein the stationary power storage device and the removable power storage device further comprise at least one sensing unit and a storage unit; the sensing unit is electrically connected to the control unit and configured to sense a temperature change, a current change and a voltage change of the stationary power storage device and the removable power storage device; and the control unit is electrically connected to the storage unit and the communication unit.

16. The electric vehicle power supply method according to claim 14, wherein the battery power supply determination step further comprises: determining whether the removable power storage device has power, and when the removable power storage has power, preferentially supplying power by the removable power storage device.

17. The electric vehicle power supply method according to claim 14, wherein the power supply system further comprises a power conversion unit, and the battery power supply step further comprises a charging step: when the removable power storage device supplies power to the motor, charging the non-fully charged stationary power storage device via the power conversion unit.

18. The electric vehicle power supply method according to claim 14 or 16, wherein the electric vehicle has the non-fully charged removable power storage device and the fully charged removable power storage device, and the non-fully charged power storage device preferentially supplies power to the motor.
